# EUROPÄISCHE PATENTSCHRIFT

(11) **EP 3 376 732 B1**
(45) Veröffentlichungstag und Bekanntmachung des Hinweises auf die Patenterteilung: **08.07.2020**
(21) Anmeldenummer: 17161030.6
(22) Anmeldetag: 15.03.2017
(51) Int. Cl.: H04L 29/06, H04J 3/06, H04W 56/00, H04L 12/841, H04L 12/823, H04B 7/185

(54) **POSITIONSADAPTIVES KOMMUNIKATIONSVERFAHREN**
POSITION-ADAPTIVE COMMUNICATION METHOD
PROCÉDÉ DE COMMUNICATION ADAPTANT LA POSITION

(43) Veröffentlichungstag der Anmeldung: 19.09.2018
(73) Patentinhaber: Atos Convergence Creators GmbH, 1210 Wien (AT)
(72) Erfinder: Slanina, Peter, 3441 Judenau (AT)
(74) Vertreter: Novagraaf Technologies

(56) Entgegenhaltungen:
- WO-A1-2013/063789
- US-B1- 7 596 113
- HYUNGJUN JANG ET AL: "Location-Based TDMA MAC for Reliable Aeronautical Communications", IEEE TRANSACTIONS ON AEROSPACE AND ELECTRONIC SYSTEMS, IEEE SERVICE CENTER, PISCATAWAY, NJ, US, Bd. 48, Nr. 2, 1. April 2012 (2012-04-01), Seiten 1848-1854, XP011440859, ISSN: 0018-9251, DOI: 10.1109/TAES.2012.6178108
- HO DAC TU ET AL: "A Proposal of Relaying Data in Aeronautical Communication for Oceanic Flight Routes Employing Mobile Ad-Hoc Network", INTELLIGENT INFORMATION AND DATABASE SYSTEMS, 2009. ACIIDS 2009. FIRST ASIAN CONFERENCE ON, IEEE, PISCATAWAY, NJ, USA, 1. April 2009 (2009-04-01), Seiten 436-441, XP031498017, ISBN: 978-0-7695-3580-7

## Beschreibung

Die Erfindung betrifft ein positionsadaptives Kommunikationsverfahren.

Bei einer mobilen, ungerichteten Kommunikation ergibt sich stets das Problem, dass grundsätzlich jede Station Sender und Empfänger einer Kommunikationsnachricht sein kann. Solange nicht festgelegt ist, in welcher Reihenfolge die einzelnen Stationen senden können, kann es immer vorkommen, dass zwei oder mehr Stationen gleichzeitig zu senden beginnen. Dies verursacht jedoch unvermeidlich eine Kollision der gesendeten Nachrichten und somit einen Totalverlust bei beiden sendenden Stationen. Dieser Umstand führte dazu, dass in Kommunikationsprotokollen, insbesondere bei Kommunikationsprotokollen für eine paketorientierte Nachrichtenübertragung, Wartepausen eingefügt wurden. Dabei ist vorgesehen, dass nach dem Senden einer Nachricht eine festgelegte Zeit gewartet werden muss, bevor erneut ein Sendeversuch stattfinden kann. Damit nicht alle im Verbund befindlichen Sendestationen nach Ablauf der Wartepause zugleich zu senden beginnen, ist vorgesehen, dass diese Wartepause eine Zufallskomponente enthält, sodass die Wahrscheinlichkeit gering ist, dass zwei Stationen zeitgleich mit dem Senden beginnen. Die Grunddauer der Wartepause wird von der maximal möglichen Kommunikationsdistanz bestimmt. Die Wartepause entspricht dabei beispielsweise dem doppelten der maximalen Signallaufzeit zwischen Sender und Empfänger. Damit ist gewährleistet, dass eine kollisionsfreie Kommunikation zwischen zwei Stationen möglich ist, welche Stationen sich in der maximal abdeckbaren Distanz voneinander entfernt befinden.

Nachteilig an diesem Ansatz ist jedoch, dass die Kommunikationspause auf die maximal mögliche Kommunikationsentfernung ausgelegt ist, welche in der reellen Praxis nur bedingt anzuwenden ist. Vielfach werden Kommunikationsverbindungen zwischen deutlich geringer voneinander entfernten Stationen aufgebaut, sodass die eingefügte Wartepause zu lange ist und dadurch wertvolle Übertragungskapazität vergeudet wird.

Es wäre nun möglich, ein speziell auf diese Situation angepasstes Kommunikationsprotokoll zu entwerfen, was jedoch den Nachteil hätte, dass standardisierte und verfügbare Kommunikationsmittel ein derartiges Kommunikationsprotokoll meist nicht unterstützen würden.

WO 2013/063789 A1 ist ein Dokument nach dem Stand der Technik.

Die Aufgabe der Erfindung liegt nun darin ein bestehendes Kommunikationssystem bzw. Kommunikationsverfahren und/oder Kommunikationsprotokoll dahingehend zu verbessern, dass eine auf die Kommunikationssituation angepasste maximale Übertragungskapazität erreicht wird.

Die Aufgabe der Erfindung wird gelöst durch ein positionsadaptives Kommunikationsverfahren, ausgeführt von einem Kommunikationssteuerungsmodul eines beweglichen Fahrzeugs. Das Verfahren dient zum Aufbau und Halten einer Kommunikationsverbindung zwischen einer Kommunikationsschnittstelle eines beweglichen Fahrzeugs, insbesondere einem Wasser- und/oder Luftfahrzeug, und einer Kommunikationsschnittstelle einer Gegenstation. Das Kommunikationsverfahren ist ein paketbasiertes Kommunikationsverfahren, mit einem Kommunikationsprotokoll, welches in einem Kommunikationsrahmen in einer Abfolge Nutzdaten, Sicherungsdaten und ggf. Signalisierungsdaten als Datenpakete überträgt, und wobei zwischen Datenpaketen und/oder innerhalb der Datenpakte, eine Übertragungspause vorgesehen ist, wobei sich die Übertragungspause aus der Summe einer Laufzeit eines Datenpackets vom Fahrzeug zur Gegenstation, einer Verarbeitungszeit zum Empfangen und Aufbereiten des Datenpackets und zum Generieren einer Bestätigungsnachricht an der Gegenstation und einer Laufzeit der Bestätigungsnachricht von der Gegenstation zum Fahrzeug ergibt. Das Verfahren umfasst die Schritte:
- Ermitteln von Positionsdaten des Fahrzeugs in Bezug zu einem globalen Koordinatensystem.
- Empfangen eines Bewegungsdatensatzes von zumindest einer Gegenstation mittels einer Empfangsvorrichtung.
- Extrahieren von Positionsdaten aus den empfangenen Bewegungsdaten und Bestimmen der Position der Gegenstation im Koordinatensystem.
- Ermitteln eines Richtungsvektors vom Fahrzeug zur Gegenstelle.
- Ermitteln einer Signallaufzeit aus der Länge des Richtungsvektors.
- Adaptive Anpassung der Übertragungspause an die ermittelte Signallaufzeit durch einen Zeitgeber des Kommunikationssteuerungsmoduls.

Das Koordinatensystem ist dahingehend ausgestaltet, dass sich dieses für das Fahrzeug und die Gegenstation auf denselben Bezugspunkt bezieht. Beispielsweise kann es sich um ein satellitengestütztes Navigationssystem handeln. Es kann sich aber auch um ein lokales, proprietäres Koordinatensystem handeln, das von Betreiber eines Kommunikationssystems festgelegt wurde, welches Kommunikationssystem das gegenständliche Verfahren verwendet.

Unter einer Gegenstation wird hierin im Wesentlichen eine Basisstation eines zellularen Kommunikationsnetzwerks verstanden. Innerhalb eines definierbaren Bereichs um die Basisstation können Teilnehmer, insbesondere das gegenständliche bewegliche Fahrzeug, eine Kommunikationsverbindung zur Basisstation, als Gegenstation, aufbauen. Im Weiteren werden die Begriffe Gegenstation und Basisstation gleichbedeutend verwendet. Im Hinblick auf Meshed Netzworks wird unter diesem Begriff auch ein anderer Knoten im Netzwerk verstanden.

Für die Ermittlung der Signallaufzeit ist der Abstand zwischen Fahrzeug und Gegenstation von Bedeutung. Der Richtungsvektor ist diesbezüglich als Vektor vom Ausgangspunkt zum Zielpunkt zu verstehen, die Länge des Richtungsvektors entspricht somit dem Vektorbetrag. Eine Information bezüglich einer Richtung des Vektors ist für das gegenständliche Verfahren nicht von Bedeutung, gleichwohl ein Vektor stets auch eine Richtungsinformation enthalten wird. Insbesondere da die Positionsdaten des Fahrzeugs und die aus den übermittelten Bewegungsdaten extrahierten Positionsdaten der Gegenstation, einen Bezug zu einer absoluten Richtung enthalten können.

Als Kommunikationsrahmen werden hierin ein festgelegter Aufbau bzw. eine festgelegte Abfolge von Elementen des verwendeten Kommunikationsprotokolls verstanden. Da Details des Rahmenaufbaus nicht Gegenstand dieser Erfindung sind, wird der Fachmann auf einschlägigen Literatur zu WiMAX und LTE (in TDD und FDD) verwiesen.

Als Übertragungspause ist hierin grundsätzlich eine Zeit zu verstehen, in der keine Übertragung stattfinden darf. Bei WiFi meshed networks muss vor und nach einem Datenpaket eine Pause vorhanden sein, da sonst das CSMA/CA Übertragungsprotokoll eine Kollision verursachen würde. Hier dürfen die einzelnen Kommunikationsschnittstellen für die maximale Laufzeit nicht senden. Bei WiMAX und LTE im Modus TDD (time division duplex) ist eine Pause jeweils vor einem Wechsel der Übertragungsrichtung vorgesehen. Die Länge der Pause ist ebenfalls durch die maximale Laufzeit festgelegt. Im TDD Mode bei LTE und WiMAX ändert sich die Richtungen der Übertragung zwei Mal je Kommunikationsrahmen. Zur Kompensation der maximalen Funklaufzeit werden in beiden Fällen Übertragungspausen eingefügt.

Bei LTE und WiMAX im FDD Mode senden die Basisstation (eNB evolved NodeB) und die Kommunikationsschnittstelle des Fahrzeugs (bzw. anderer Kommunikationsteilnehmer) auf verschiedenen Frequenzen. Da die Signale des Fahrzeugs in den vorgesehenen Sendezeitschlitz passen müssen sind auch bei FDD beim Erstzugriff Übertragungspausen notwendig. Diese Übertragungspausen werden mit dem gegenständlichen vorteilhaften positionsadaptiven Kommunikationsverfahren bestimmt.

Nach einer Weiterbildung ist vorgesehen, dass bei einer vom Kommunikationsprotokoll vorgesehenen Übertragungspause, welche kürzer als die ermittelte Signallaufzeit ist, die Übertragungspause zumindest der ermittelten Signallaufzeit gleichgesetzt wird. Ohne diese Weiterbildung kann und wird es vorkommen, dass das Fahrzeug erneut Datenpakete abschickt, bevor, aufgrund der Entfernung, eine eventuelle Antwort der Gegenstation die Sendestation erreichen kann. Dadurch kommt es zur Kollision und zum Verlust des übertragenen Datenpakets. Mit dieser Ausbildung wird gewährleistet, dass das Fahrzeug frühestens dann sendet, wann eine Antwort der Gegenstation eintreffen hätte müssen.

Es wird festgehalten, dass im Weiteren vom sendenden/empfangenden Fahrzeug bzw. Gegenstation gesprochen wird. Technisch ist darunter zu verstehen, dass jeweils eine Kommunikationseinrichtung über die Kommunikationsschnittstelle ein Signal bzw. Datenpaket sendet bzw. empfängt. Gleichbedeutend sind auch die Begriffe Sender und Empfänger zu verstehen. Ferner ist der Begriff Signallaufzeit oder vereinfacht Laufzeit nicht dahingehend einschränkend zu verstehen, dass damit die Zeitspanne vom Sender zum Empfänger beschrieben wird. Insbesondere ist unter der Laufzeit auch die gesamte Zeitspanne eines einzelnen Kommunikationszyklus zu verstehen - im Sinn einer RTT (round trip time).

Eine Weiterbildung besteht auch darin, dass bei einer vom Kommunikationsprotokoll vorgesehenen Übertragungspause, welche länger als die ermittelte Signallaufzeit ist, die Übertragungspause zumindest der ermittelten Signallaufzeit gleichgesetzt wird. Diese Weiterbildung gewährleistet, dass eine Übertragungspause nicht unnötig lange dauert, wenn aufgrund bspw. eines geringen Abstandes, deutlich früher wieder gesendet werden könnte. Zumeist ist ein Kommunikationsprotokoll derart ausgelegt, dass jedenfalls mit einer Gegenstation kommuniziert werden kann, welche die maximal technisch mögliche Distanz entfernt ist. Die maximale Distanz ergibt sich aus den Parametern des von der Kommunikationsschnittstelle verwendeten Kommunikationsmediums und wird im Wesentlichen durch die Ausbreitungsdämpfung bestimmt. Befindet sich die Gegenstation nahe beim Fahrzeug, wird viel mögliche Übertragungskapazität verschenkt, in dem die Übertragungspausen deutlich zu lange gewählt sind. Es wird festgehalten dass die Verkürzung der Übertragungspause lediglich soweit erfolgt, dass jedenfalls alle möglichen Kommunikationspartner die das gegenständliche Kommunikationsverfahren nutzen wollen, dies auch können. Diese Weiterbildung gilt auch für den Fall, dass mehrere Stationen in einem Kommunikationsnetz vorhanden sind, insbesondere für alle Gegenstationen im Teilnetz (z.B. alle Mobilstationen die mit einer Basisstation verbunden sind), oder alle WiFi Stationen die ein lokales Netzwert auf einer Frequenz bilden.

Eine Weiterbildung besteht darin, dass die Positionsdaten des Fahrzeugs aus Datenpaketen extrahiert werden, die mittels eines am Fahrzeug vorgesehenen Empfängers von einem globalen Satellitennavigationssystem empfangen wurden. Fahrzeuge haben vielfach eine Vorrichtung zum Empfang von Satellitennavigationssignalen und zur Extraktion von Positionsdaten aus den empfangenen Signalpaketen. Diese Positionsdaten lassen sich nun in vorteilhafter Weise dazu verwenden, bei der Ermittlung des Richtungsvektors, die Position des eigenen Fahrzeugs festzulegen. In vorteilhafter Weise kann das gegenständliche Verfahren auf bestehende Systeme zugreifen und ist keine zusätzliche aufwändige und kostspielige Installation erforderlich.

Eine Weiterbildung besteht darin, dass von einem automatisierten Identifikationssystem des Fahrzeugs und/oder der Gegenstation, zyklisch Bewegungsdaten ausgesendet werden und von einer Empfangsvorrichtung des Fahrzeugs empfangen werden. Aufgrund Internationaler Vereinbarungen zur Sicherung des Schiffverkehrs (SOLAS), muss jedes größere Schiff ein automatisches Identifikationssystem (AIS) an Bord haben. Bei diesem System werden umfassen die Bewegungsdaten die Position (LAT, LON), Kurs (COG), Geschwindigkeit (SOG), Zeit (UTC) und Kursrichtung (Heading). Im Luftverkehr gibt es mit dem ADS-B eine Äquivalenz. Diese Weiterbildung hat den Vorteil, dass das gegenständliche Verfahren auf Identifikationsdaten zugreifen kann, die aufgrund der sicherheitsrelevanten Bedeutung, eine hohe Genauigkeit aufweisen und vor allem stets aktuell gehalten werden. In Abhängigkeit von der anwendbaren Sicherheitsklasse, liegt bei AIS die Aktualisierungsrate im Bereich von 2 Sekunden - bis 3 Minuten.

Nach einer Weiterbildung ist vorgesehen, dass aus den empfangenen Bewegungsdaten eine Identifikationskennung extrahiert wird, und Fahrzeug- und/oder als Gegenstationskennung in einer Datenbank des Kommunikationssteuerungs-Moduls abgelegt werden. Gemäß internationaler Vorschiften trägt jedes Fahrzeug (Wasser- oder Luftfahrzeug) eine eindeutige Kennung, bspw. einen Fahrzeugnamen und/oder eine Registraturnummer. In einer Weiterbildung werden zusätzlich auch die aktuell empfangenen Bewegungsdaten in der Datenbank abgelegt. Dadurch wird es möglich, ohne einen vorherigen Austausch von Kommunikationsparameter oder Austausch von Kennungen, das Kommunikationsprotokoll (die Übertragungspause) anzupassen und eine Kommunikationsverbindung zu einer spezifischen Gegenstation aufzubauen, da die erforderlichen Parameter aus der Datenbank ausgelesen werden können. Die Gegenstandskennung kann aber auch durch eine Kennung des Kommunikationsnetzwerks bzw. der Sendevorrichtung gebildet sein, sodass sich nur jene Sendevorrichtungen mit dem Kommunikationsnetz verbinden können, welche die entsprechende Kennung aufweisen. Von Bedeutung ist jedenfalls, dass keine Kennung über die Kommunikationsverbindung übertragen werden muss, da diese hinterlegt sind

Für ein Unternehmen bzw. eine Organisation ist es zumeist lediglich von Bedeutung, dass zwischen den eigenen Fahrzeugen eine zuverlässige Kommunikationsverbindung besteht. Daher ist nach einer Weiterbildung vorgesehen, dass einer Auswahl von hinterlegten Gegenstationskennungen eine Gruppenkennung zugewiesen und hinterlegt wird. Mit dieser Weiterbildung lassen sich jede Gegenstationen zusammenfassen bzw. markieren, die bspw. zur Fahrzeugflotte eines Unternehmens gehören.

Nach einer Weiterbildung ist vorgesehen, dass die Anpassung der Übertragungspause nur bei Gegenstationen durchgeführt wird, für die in der Datenbank eine Gruppenkennung hinterlegt ist. Mit dieser Weiterbildung lässt sich die Anzahl der zu betrachtenden Gegenstationen deutlich reduzieren, da Gegenstationen mit einer Identifikationskennung, für die keine Gruppenkennung hinterlegt ist, nicht beachtet werden. Insbesondere ist anzunehmen, dass Gegenstationen ohne Gruppenkennung das gegenständliche Verfahren nicht unterstützen und es somit bei Anpassung der Übertragungspause zu Kommunikationsfehlern kommen wird.

Neben einer Kommunikation mit ortsveränderlichen Gegenstationen kann vorgesehen sein, dass auch mit ortsfesten Basisstationen eine Kommunikationsverbindung aufgebaut werden soll. Ortsfeste Basisstationen müssen jedoch nicht unbedingt ein automatisiertes Identifikationssystem aufweisen. Eine Weiterbildung besteht daher darin, dass in der Datenbank Positionsdaten zumindest einer ortsfesten Gegenstation hinterlegt sind. Soll eine Kommunikationsverbindung zu einer Basisstation aufgebaut werden, kann der Richtungsvektor, aufgrund der Kenntnis der Position der Basisstation, unmittelbar bestimmt werden.

Eine Weiterbildung besteht ferner darin, dass Bewegungsdaten mehrerer Gegenstationen empfangen werden, und dass für jede dieser Gegenstationen ein Richtungsvektor ermittelt wird. Falls mit mehreren Gegenstationen kommuniziert werden soll ist es von Vorteil, wenn mittels des Richtungsvektors, für jede Gegenstation die Laufzeit bekannt ist. Somit kann für jeden Kommunikationsweg die optimale Übertragungspause verwendet werden.

Ebenfalls von Vorteil ist eine Weiterbildung, nach der die Signallaufzeit als Maximum der Längen der Richtungsvektoren ermittelt wird. Soll mit mehreren Gegenstationen gleichzeitig eine Kommunikationsverbindung gehalten werden, muss die Übertragungspause an die weitest entfernte Gegenstation angepasst werden, damit diese auch sicher die Kommunikationsverbindung halten kann. In Abhängigkeit vom verwendeten Kommunikationsprotokoll wird unter dem Maximum der Längen der Richtungsvektoren im Fall LTE / WiMAX das Maximum der Distanz aller Mobilstationen zur Basisstation verstanden, und bei WiFi Netzwerken das Maximum der Distanzen zwischen allen Stationen im Neztwerk.

Bewegt sich das Fahrzeug und/oder die Gegenstation, wird sich höchstwahrscheinlich der Richtungsvektor ändern und somit auch die aktuelle Laufzeit von der ermittelten Laufzeit abweichen. Daher ist nach einer Weiterbildung vorgesehen, dass der Zeitgeber die Anpassung der Übertragungspause zyklisch durchführt. Die Zykluszeit wird von der zu erwartenden maximalen Bewegungsgeschwindigkeit der Kommunikationspartner abhängen.

Von Vorteil ist ferner eine Weiterbildung, nach der der Zeitgeber die Übertragungspause aus dem Laufzeitsignal und einer Sicherheitszeitspanne bildet. Entspricht die Übertragungspause genau dem Laufzeitsignal, kann es aufgrund geringfügiger zeitlicher Schwankungen vorkommen, dass dennoch eine Übertragungs-Kollision auftritt. Beispielsweise kann sich ein Fahrzeug geringfügig bewegen, auch kann es am Kommunikationsweg bzw. am Kommunikationsmedium, zu geringfügigen Schwankungen der Ausbreitungsparameter kommen. Mit der gegenständlichen Weiterbildung ist gewährleistet, dass die Übertragungspause lange genug ist, sodass auch solche kleinen Schwankungen zu keiner Störung der Übertragung führen, ohne dass die Übertragungspause als solche angepasst werden muss.

Eine vorteilhafte Weiterbildung besteht auch darin, dass im Kommunikationssteuerungsmodul ein Zellenplan hinterlegt ist, der Koordinaten des Versorgungsgebiets umfasst, und dass vom Kommunikationssteuerungsmodul die ermittelten Positionsdaten des Fahrzeugs mit den hinterlegten Koordinaten des Versorgungsgebiets verglichen wird, und bei einer Fahrzeugposition außerhalb des Versorgungsgebiets, die Kommunikationsschnittstelle des Fahrzeugs deaktiviert wird. Das Versorgungsgebiet um die Basisstation hängt ganz wesentlich von der technischen Ausgestaltung der Kommunikationsschnittstelle der Basisstation ab, insbesondere von der Ausgestaltung der Antennen. Dieses Versorgungsgebiet ist mittels numerischer Verfahren vorab ermittelbar und kann somit in jedem Fahrzeug hinterlegt werden. Mit dieser Weiterbildung ist es dem Kommunikationssteuerungsmodul jederzeit möglich zu prüfen, ob sich das Fahrzeug noch im Versorgungsbereich befindet. Um eine Störung anderer Kommunikationsteilnehmer zu verhindern, kann bei Verlassen des Versorgungsgebiets die Kommunikationsschnittstelle, insbesondere die Funk-Einheit, deaktiviert werden. Diese Ausbildung hat ferner den Vorteil, dass vom Kommunikationssteuerungsmodul ohne aktive Kommunikationsverbindung zur Gegenstation entschieden werden kann, ob sich das Fahrzeug innerhalb zulässiger Koordinaten befindet, und eine Kommunikationsverbindung aufbauen darf.

Alternativ zur Hinterlegung vorab, ist es ferner auch möglich, dass von der Gegenstation über die Kommunikationsverbindung ein Zellenplan zum Fahrzeug übertragen wird, und dort vom Kommunikationssteuerungsmodul hinterlegt wird. Diese Ausbildung hat den Vorteil, dass das Kommunikationssteuerungsmodul stets aktuelle Daten das jeweilige Versorgungsgebiet betreffend, zur Verfügung hat. Insbesondere ist eine Konfiguration des Fahrzeugs vor Ort nicht erforderlich, da der Zellenplan zentral berechnet werden kann, und über einen Datenkommunikationsweg direkt an das Fahrzeug übermittelt werden.

Eine Weiterbildung besteht auch darin, dass das Kommunikationssteuerungsmodul über die Kommunikationsverbindung eine Datenverbindung zu einem Verarbeitungsdienst aufbaut und die Positionsdaten des Fahrzeugs und der Gegenstation an den Verarbeitungsdienst überträgt und die Signallaufzeit und/oder ein aktualisiertes Kommunikationsprotokoll empfängt. Im Hinblick auf eine möglichst hohe Flexibilität hat diese Weiterbildung den Vorteil, dass vor Ort lediglich die Grundfunktionalität des gegenständlichen Verfahrens vorhanden sein muss, die Ermittlung der für die aktuelle Situation erforderlichen Parameter, erfolgt von einer zentralen Stelle aus, bspw. einem Cloud-Dienst.

Die Aufgabe der Erfindung wird auch durch ein Kommunikationsprotokoll zur Verwendung in einem gegenständlichen Kommunikationsverfahren gelöst. Das Kommunikationsprotokoll wird von einem Kommunikationssteuerungsmodul abgearbeitet wird und definiert, dass in einer zeitlich festgelegten Abfolge, Nutzdaten, Signalisierungsdaten, Sicherungsdaten, etc. übertragen werden, wobei zwischen Datenpaketen und/oder innerhalb der Datenpakte, eine Übertragungspause vorgesehen ist. Dazu weist das Kommunikationssteuerungsmodul einen Zeitgeber auf, welcher Zeitgeber zur Beeinflussung der Übertragungspause ausgebildet ist, und welcher Zeitgeber einen Signaleingang aufweist, an welchem ein Laufzeitsignal anliegt, welches Laufzeitsignal als Basis für die Beeinflussung dient.

Nach einer Weiterbildung ist das Kommunikationsprotokoll als eines der Protokolle der Gruppe CSMA/CA, WiMAX, LTE gebildet ist, sowie WiMAX und LTE im Modus TDD oder FDD. Diese Protokolle sind hinsichtlich ihrer Störsicherheit bei gleichzeitig hoher Übertragungskapazität optimiert.
Fig. 1 Zeigt eine schematische Darstellung der Kommunikationssituation zwischen einem Fahrzeug und mehreren Gegenstationen;
Fig. 2 zeigt ein Zeit-Diagramm der Übertragung eines Nachrichtenpakets zu unterschiedlich weit entfernten Gegenstationen.

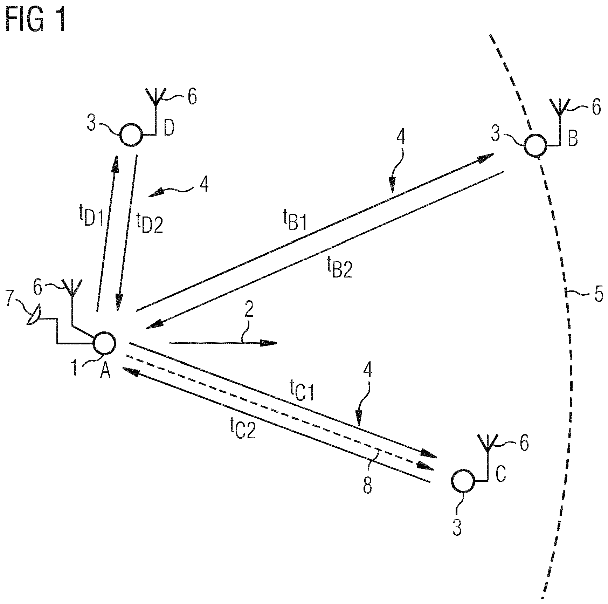

Fig. 1 zeigt eine reale Kommunikationssituation zwischen mehreren Kommunikationsstationen. Eine der Kommunikationsstationen, ein Fahrzeug 1, bewegt sich dabei entlang einer Bewegungsrichtung 2 zwischen den anderen Stationen 3, wobei zwischen dem Fahrzeug 1 und den Gegenstationen 3 B, C, D, eine Kommunikationsverbindung 4 bestehen kann. Vereinbart gilt, dass es sich bei der Kommunikationsverbindung 4 um eine drahtlose Kommunikationsverbindung, insbesondere eine funkbasierte Kommunikationsverbindung handelt. Ferner wird über die Kommunikationsverbindung 4 ein datenpaket-basiertes Kommunikationsprotokoll abgewickelt, welches sich vereinfacht dadurch charakterisieren lässt, dass ein Datenpaket (Nutzdaten, Steuerungsdaten, Synchronisiation, ...) vom Sender ausgesendet wird, und der Empfang vom Empfänger bestätigt werden muss. Erst nach dieser Bestätigungsmeldung kann vom selben bzw. einem anderen Sender ein Datenpaket abgeschickt werden. Der Sender muss also immer die maximal mögliche Laufzeit abwarten, bevor ein neuerlicher Sendevorgang gestartet werden kann. Die maximal mögliche Signallaufzeit ergibt sich nun im Wesentlichen aus dem doppelten der Laufzeit eines Datenpakets vom Sender zum weitestmöglichen Empfänger, welcher mit den technischen Parametern der Kommunikationsverbindung noch erreichbar ist.

Gleichbedeutend ist Figur 1 auch dahingehend zu verstehen, dass es sich um einen TDD-Modus handeln kann, bei dem während einer ersten Zeit eine Übertragung vom Sender A zum Empfänger B erfolgt, und dann, nach einer Umschaltzeit, eine Übertragung vom der Station B, nun als Sender, zum Empfänger A. Im Weiteren wird eine bestätigte Übertragung der Beschreibung zugrunde gelegt.

Es wird im Weiteren von einer Kommunikationsverbindung zwischen Fahrzeug und Gegenstation gesprochen, wobei festgehalten wird, dass die Kommunikationsverbindung zwischen einer Kommunikationsschnittstelle des Fahrzeugs und einer Kommunikationsschnittstelle der Gegenstation besteht.

Ausgehend vom Fahrzeug 1 als Kommunikationsstation A ist gemäß den funktechnischen Gegebenheiten der Kommunikationsverbindung 4 ein Kommunikationsgebiet festgelegt, welches im Wesentlichen einem Kommunikationsradius 5 mit dem Fahrzeug 1 im Mittelpunkt entspricht. Die Gegenstation B ist somit die am weitesten vom Fahrzeug 1 entfernte Station, zu der eine Kommunikationsverbindung 4 aufgebaut werden kann. Ein vom Fahrzeug 1 ausgesandtes Kommunikationspaket benötigt die Zeit tB1 bis zur Gegenstation B. Das Paket wird von der Gegenstation B geprüft und eine Empfangsbestätigung zurück an das sendende Fahrzeug 1 geschickt. Diese Bestätigung benötigt nun die Zeit tB2 bis sie vom Fahrzeug 1 empfangen werden kann.

Neben maximal entfernten Gegenstationen B bzw. weit entfernten Gegenstationen C, kann auch eine Kommunikation vom Fahrzeug 1 mit einer Gegenstation D bestehen. Deutlich erkennbar ist, dass die Signallaufzeit tD1 zur Gegenstation D und zurück tD2 deutlich geringer ist als dies beispielsweise für eine weiter entfernte Gegenstation C der Fall ist. Aufgrund der Vorgaben im Kommunikationsprotokoll würde das Fahrzeug 1 die maximal vorgegebene Sendepause warten bevor ein neues Datenpaket abgesendet wird.

Mit dem gegenständlichen vorteilhaften positionsadaptiven Kommunikationsverfahren wird es nun möglich, die Übertragungskapazität deutlich zu verbessern, indem die Übertragungspause an die Entfernung zur Gegenstation angepasst wird.

In der internationalen See- bzw. Luftfahrt ist verpflichtend vorgesehen, dass jedes Fahrzeug bzw. jede Gegenstation ein automatisches Identifikationssystem 6 aufweist, welches charakteristische Bewegungsdaten des Fahrzeuges bzw. der Gegenstation aussendet. Diese ausgesandten Bewegungsdaten können von allen Fahrzeugen bzw. Stationen empfangen und ausgewertet werden. Somit kennt das Fahrzeug 1 jederzeit die Position(en), in Bezug zu einem globalen Koordinatensystem, wo sich Gegenstationen befinden. Zur Bestimmung der eigenen Position kann das Fahrzeug ebenfalls mit einem automatisierten Identifikationssystem ausgestattet sein, es ist jedoch auch möglich, dass die Position des Fahrzeuges 1, in Bezug zu einem globalen Koordinatensystem, mittels einem sattelitengestützten Navigationssystem bestimmen kann. Dazu weist das Fahrzeug 1 eine Empfangsvorrichtung 7 für ein globales Sattelitennavigationssystem auf.

Aus der Kenntnis der eigenen Position des Fahrzeugs 1 und der Kenntnis der Position der Gegenstation 3, kann vom Fahrzeug 1 zur Gegenstation 3 ein Richtungsvektor 8 ermittelt werden. Aus der Länge dieses Richtungsvektors 8 und den ausbreitungstechnischen Kenngrößen des Kommunikationsmediums vom Fahrzeug 1 zur Gegenstation 3, lässt sich die Signallaufzeit vom Fahrzeug zur Gegenstation ermitteln. Dies ist insbesondere möglich, ohne dass dafür eine Kommunikationsverbindung 4 bestehen muss bzw. ohne dass dafür irgendeine Art von Kommunikation bzw. Synchronisation zwischen Fahrzeug 1 und Gegenstation 3 stattgefunden haben muss.

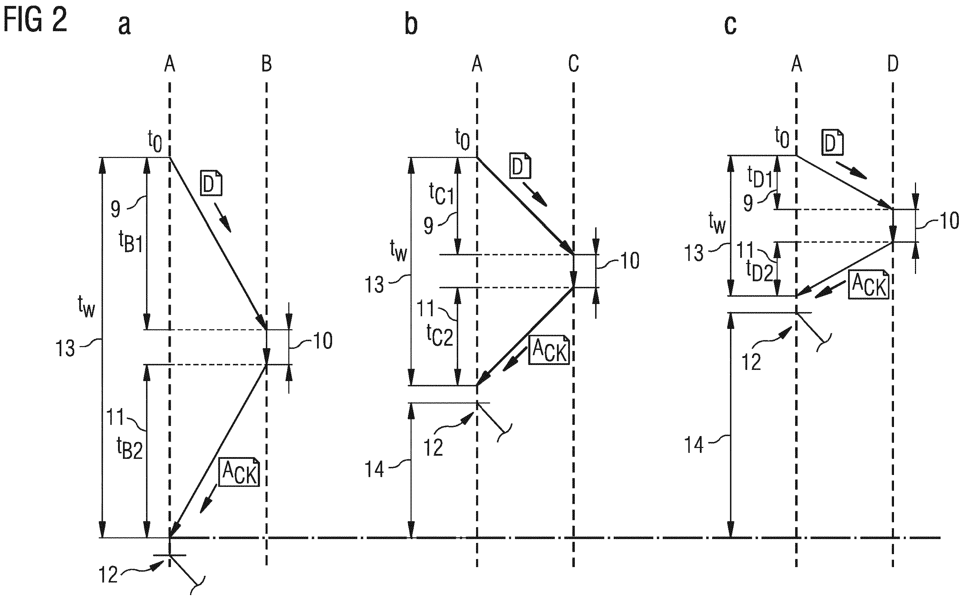

Die Fig. 2 zeigt Signallaufdiagramme bei der Kommunikation des Fahrzeuges mit unterschiedlichen Gegenstationen.

Fig. 2a zeigt das Laufzeitdiagramm bei der Kommunikation mit einer Gegenstation B am maximalen Kommunikationsradius 5. Dargestellt ist hier jeweils die Übertragung eines einzigen Paketes unabhängig des Typs. Ferner wird davon ausgegangen, dass die Kommunikationsverbindung zwischen dem Fahrzeug A und der jeweiligen Gegenstation (B, C, D) besteht.

Zu einem Zeitpunkt t0 wird vom Fahrzeug A ein Nachrichtenpaket über die Kommunikationsschnittstelle ausgesandt und bewegt sich am Kommunikationsweg vom Fahrzeug A zur Gegenstation B. Die Ausbreitungsgeschwindigkeit ergibt sich aus den technischen Gegebenheiten des Kommunikationswegs. Nach einer ersten Laufzeit tB1 9 erreicht das Nachrichtenpaket die Gegenstation B. Dort wird das Nachrichtenpaket empfangen, aufbereitet und wie bei paketbasierter Nachrichtenübertragung vorgesehen, der Empfang des Pakets bestätigt, indem eine Bestätigungsnachricht zurückgesendet wird. Das Empfangen, Aufbereiten und Generieren der Bestätigungsantwort benötigt etwas Verarbeitungszeit 10 an der Gegenstation B, wobei diese Verarbeitungszeit 10 in der Fig. 2 deutlich vergrößert dargestellt ist.

Nach der zweiten Laufzeit tB2 11 erreicht die Bestätigungsnachricht das Fahrzeug 1, wodurch ein Übertragungszyklus abgeschlossen ist. Nach einer kurzen Verarbeitungszeit könnte somit das Fahrzeug zum nächsten Sendezeitpunkt 12 das nächste Nachrichtenpaket in Richtung der Gegenstation B abschicken. Die Übertragungspause tW 13, bevor die sendende Station das nächste Nachrichtenpaket zur Gegenstation abschicken kann, ergibt sich also aus der Summe der ersten 9 und zweiten 11 Laufzeit sowie der Verarbeitungszeit 10.

Fig. 2b zeigt eine Kommunikation mit einer näher zum Fahrzeug A angeordneten Gegenstation C. Der grundsätzliche Ablauf ist gleich zu der in Fig. 2a dargestellten Situation. Zu einem Zeitpunkt t0 wird vom Fahrzeug A ein Nachrichtenpaket in Richtung der Gegenstation C abgeschickt, und erreicht dieses nach der ersten Laufzeit 9 tC1. Nach der Verarbeitungszeit 10 an der Gegenstation C wird eine Bestätigungsnachricht zurück zum Fahrzeug gesendet und erreicht dieses nach der zweiten Laufzeit 11 tC2.

Aufgrund der geringeren Distanz zwischen Fahrzeug A und Gegenstation C ist die Bestätigungsnachricht deutlich früher beim sendenden Fahrzeug A, als dies bei einer Kommunikation mit der maximal entfernten Gegenstation B (Fig. 2a) der Fall ist. Ohne die vorteilhafte Ausbildung des gegenständlichen positionsadaptiven Kommunikationsverfahrens müsste auch im Fall 2b die maximale Übertragungspause gewartet werden. Es würde also von der Kommunikationsschnittstelle des Fahrzeuges A eine unnötige Wartezeit 14 eingelegt werden, in der die Übertragungskapazität der Kommunikationsverbindung nicht genutzt wird. Mit dem gegenständlichen Verfahren ist jedoch die Position der Gegenstation C bekannt und somit lässt sich über den ermittelten Richtungsvektor vom Fahrzeug A zur Gegenstation C, die zu erwartende maximale Laufzeit bestimmen und daher die Übertragungspause 13 auf einen geringeren Wert korrigieren. Der nächste Sendezeitpunkt 12 verschiebt sich daher nach vor, sodass die ohne das gegenständliche vorteilhafte Verfahren einzulegende Wartezeit 14 nun als Gewinn an Übertragungskapazität zu sehen ist.

Fig. 2c zeigt die Situation zwischen dem Fahrzeug A und einer Gegenstation D, welche nur einen geringen Abstand vom Fahrzeug A entfernt ist. Der grundsätzliche Ablauf entspricht den zuvor bereits beschriebenen. Zu einem Zeitpunkt t0 wird von einem Fahrzeug A ein Nachrichtenpaket zur Gegenstation D geschickt und erreicht dieses nach der ersten Laufzeit 9 tD1. Nach der Verarbeitungszeit 10 an der Gegenstation D wird eine Bestätigungsnachricht zurück zum Fahrzeug A gesandt und erreicht dieses nach der zweiten Laufzeit 11 tD2. Der Gewinn an Übertragungskapazität ist hier besonders deutlich zu sehen, da aufgrund der Kenntnis des Abstandes, die Übertragungspause 13 deutlich reduziert werden kann. Im dargestellten Fall ist sie geringer ist als die erste Laufzeit 9 bei der Kommunikation des Fahrzeuges A mit der am weitest möglich entfernten Gegenstation B (Fig. 2a). Auch im Fall 2c müsste die Kommunikationsschnittstelle am Fahrzeug A ohne das gegenständliche vorteilhafte Verfahren die gesamte maximale Übertragungspause abwarten, was zur Situation führen würde, dass die Wartezeit 14 länger wäre als ein einzelner Kommunikationsablauf.

Es wird nochmals ausdrücklich darauf hingewiesen, dass die Übertragungspause nur soweit reduziert werden kann, dass jedenfalls alle im Kommunikationsnetz vorhandenen Stationen das gegenständliche Verfahren nutzen können. Findet eine Kommunikation zwischen den Stationen A und C aus Figur 1 statt, und verlässt bspw. die Station B den Kommunikationsradius 5, wird die Übertragungspause durch die Entfernung zu Fahrzeug C festgelegt, welches nun das am weitest entfernte Fahrzeug ist.

Mit dem gegenständlichen Verfahren lässt sich die Kommunikationsverbindung deutlich besser ausnutzen, da aufgrund der Kenntnissen des Abstands zur Gegenstation bzw. der Abstände zu den Gegenstationen die Übertragungspausen 13 auf das für diese Kommunikationssituation bzw. Entfernung erforderliche, minimale Maß gekürzt werden kann. Eine Wartezeit 14 zur Erfüllung der protokollgegebenen maximalen Kenngrößen entfällt daher.

Aufgrund der Kenntnis der Position der Gegenstationen kann mit dem gegenständlichen Verfahren die Übertragungspause für jede Kommunikationsverbindung individuell angepasst werden, sodass bei jeder Kommunikationsverbindung die maximal mögliche Übertragungskapazität erreicht wird, in dem Wartepausen zur Erfüllung eines starren Protokollrahmens vermieden werden.

## Patentansprüche

1. Positionsadaptives Kommunikationsverfahren, ausgeführt von einem Kommunikationssteuerungsmodul eines beweglichen Fahrzeugs (1), zum Aufbau und Halten einer Kommunikationsverbindung (4) zwischen einer Kommunikationsschnittstelle eines beweglichen Fahrzeugs (1), insbesondere einem Wasser- und/oder Luftfahrzeug, und einer Kommunikationsschnittstelle einer Gegenstation (3), wobei das Kommunikationsverfahren ein paketbasiertes Kommunikationsverfahren ist, mit einem Kommunikationsprotokoll, welches in einem Kommunikationsrahmen, in einer Abfolge Nutzdaten, Sicherungsdaten und ggf. Signalisierungsdaten, als Datenpaket überträgt, und wobei zwischen Datenpaketen und/oder innerhalb der Datenpakte eine Übertragungspause (13) vorgesehen ist, wobei sich die Übertragungspause (13) aus der Summe einer Laufzeit (9) eines Datenpakets vom Fahrzeug (1) zur Gegenstation (3), einer Verarbeitungszeit (10) zum Empfangen und Aufbereiten des Datenpakets und zum Generieren einer Bestätigungsnachricht an der Gegenstation (3) und einer Laufzeit (11) der Bestätigungsnachricht von der Gegenstation (3) zum Fahrzeug (1) ergibt, umfassend die Schritte
- Ermitteln von Positionsdaten des Fahrzeugs (1) in Bezug zu einem Koordinatensystem;
- Empfangen eines Bewegungsdatensatzes von zumindest einer Gegenstation mittels einer Empfangsvorrichtung;
- Extrahieren von Positionsdaten aus den empfangenen Bewegungsdaten und Bestimmen der Position der Gegenstation im globalen Koordinatensystem;
- Ermitteln eines Richtungsvektors (8) vom Fahrzeug (1) zur Gegenstation (6);
- Ermitteln einer Signallaufzeit aus der Länge des Richtungsvektors (8);
- Adaptive Anpassung der Übertragungspause (13) an die ermittelte Signallaufzeit durch einen Zeitgeber des Kommunikationssteuerungsmoduls.

2. Kommunikationsverfahren nach Anspruch 1, **dadurch gekennzeichnet, dass** bei einer vom Kommunikationsprotokoll vorgesehenen Übertragungspause (13), welche kürzer als die ermittelte Signallaufzeit ist, die Übertragungspause zumindest der ermittelten Signallaufzeit gleichgesetzt wird.

3. Kommunikationsverfahren nach Anspruch 1 oder 2, **dadurch gekennzeichnet, dass** bei einer vom Kommunikationsprotokoll vorgesehenen Übertragungspause (13), welche länger als die ermittelte Signallaufzeit ist, die Übertragungspause zumindest der ermittelten Signallaufzeit gleichgesetzt wird.

4. Kommunikationsverfahren nach einem der Ansprüche 1 bis 3, **dadurch gekennzeichnet, dass** die Positionsdaten des Fahrzeugs (1) aus Datenpaketen extrahiert werden, die mittels eines am Fahrzeug vorgesehenen Empfängers von einem globalen Satellitennavigationssystem (7) empfangen wurden.

5. Kommunikationsverfahren nach einem der Ansprüche 1 bis 3, **dadurch gekennzeichnet, dass** von einem automatisierten Identifikationssystem (6) des Fahrzeugs (1) und/oder der Gegenstation (3), zyklisch Bewegungsdaten ausgesendet werden und von einer Empfangsvorrichtung des Fahrzeugs (1) empfangen werden.

6. Kommunikationsverfahren nach einem der Ansprüche 1 bis 5, **dadurch gekennzeichnet, dass** aus den empfangenen Bewegungsdaten eine Identifikationskennung extrahiert wird, und als Gegenstationskennung in einer Datenbank des Kommunikationssteuerungsmoduls abgelegt werden.

7. Kommunikationsverfahren nach Anspruch 6, **dadurch gekennzeichnet, dass** einer Auswahl von hinterlegten Gegenstationskennungen eine Gruppenkennung zugewiesen und hinterlegt wird.

8. Kommunikationsverfahren nach Anspruch 6 oder 7, **dadurch gekennzeichnet, dass** die Anpassung der Übertragungspause (13) nur bei Gegenstationen durchgeführt wird, für die der Datenbank eine Gruppenkennung hinterlegt ist.

9. Kommunikationsverfahren nach einem der Ansprüche 1 bis 8, **dadurch gekennzeichnet, dass** in der Datenbank Positionsdaten zumindest einer ortsfesten Gegenstation hinterlegt sind.

10. Kommunikationsverfahren nach einem der Ansprüche 1 bis 9, **dadurch gekennzeichnet, dass** Bewegungsdaten mehrerer Gegenstationen (3) empfangen werden, und dass für jede dieser Gegenstationen (3) ein Richtungsvektor (8) ermittelt wird.

11. Kommunikationsverfahren nach Anspruch 10, **dadurch gekennzeichnet, dass** die Signallaufzeit als Maximum der Längen der Richtungsvektoren (8) ermittelt wird.

12. Kommunikationsverfahren nach einem der Ansprüche 1 bis 11, **dadurch gekennzeichnet, dass** der Zeitgeber die Anpassung der Übertragungspause (13) zyklisch durchführt.

13. Kommunikationsverfahren nach einem der Ansprüche 1 bis 11, **dadurch gekennzeichnet, dass** der Zeitgeber die Übertragungspause (13) aus der Signallaufzeit und einer Sicherheitszeitspanne bildet.

14. Kommunikationsverfahren nach einem der Ansprüche 1 bis 13, **dadurch gekennzeichnet, dass** im Kommunikationssteuerungsmodul ein Zellenplan hinterlegt ist, der Koordinaten des Versorgungsgebiets umfasst, und dass
vom Kommunikationssteuerungsmodul die ermittelten Positionsdaten des Fahrzeugs (1) mit den hinterlegten Koordinaten des Versorgungsgebiets verglichen wird, und bei einer Fahrzeugposition außerhalb des Versorgungsgebiets, die Kommunikationsschnittstelle des Fahrzeugs deaktiviert wird.

15. Kommunikationsverfahren nach Anspruch 14, **dadurch gekennzeichnet, dass** von der Gegenstation über die Kommunikationsverbindung ein Zellenplan zum Fahrzeug übertragen wird, und vom Kommunikationssteuerungsmodul hinterlegt wird.

16. Kommunikationsverfahren nach einem der Ansprüche 1 bis 15, **dadurch gekennzeichnet, dass** das Kommunikationssteuerungsmodul über die Kommunikationsverbindung eine Datenverbindung zu einem Verarbeitungsdienst aufbaut und die Positionsdaten des Fahrzeugs und der Gegenstation an den Verarbeitungsdienst überträgt und die Signallaufzeit und/oder ein aktualisiertes Kommunikationsprotokoll empfängt.

17. Kommunicationsverfahren nach einem der Ansprüche 1 bis 16, wobei das Kommunikationsprotokoll vom Kommunikationssteuerungsmodul abgearbeitet wird,
**dadurch gekennzeichnet, dass** der Zeitgeber des Kommunikationssteuerungsmoduls, zur Beeinflussung der Übertragungspause (13) ausgebildet ist,
welcher Zeitgeber einen Signaleingang aufweist, an welchem ein Laufzeitsignal anliegt,
welches Laufzeitsignal als Basis für die Beeinflussung dient.

18. Kommunikationsverfahren nach Anspruch 17, **dadurch gekennzeichnet, dass** das Kommunikationsprotokoll als eines der Protokolle der Gruppe CSMA/CA, WiMAX und LTE gebildet ist.

## Claims

1. Position-adaptive communication method, executed by a communication control module of a mobile vehicle (1), for establishing and maintaining a communications connection (4) between a communications interface of a mobile vehicle (1), in particular a water vehicle and/or aircraft, and a communications interface of a counterpart station (3), wherein the communication method is a package-based communication method, with a communications protocol, which transmits in a communications framework in a sequence user data, backup data and if necessary signalling data as a data package, and wherein between data packages and/or inside the data packages a transmission pause (13) is provided, wherein the transmission pause (13) is a result of the sum of a run time (9) of a data package from the vehicle (1) to the counterpart station (3), a processing time (10) for receiving and processing the data package and for generating a confirmation message at the counterpart station (3) and a run time (11) of the confirmation message from the counterpart station (3) to the vehicle (1), comprising the steps
- determining position data of the vehicle (1) with reference to a coordinate system;
- receiving a movement data set from at least one counterpart station by means of a receiving device;
- extracting position data from the received movement data and determining the position of the counterpart station in the global coordinate system;
- determining a direction vector (8) of the vehicle (1) to the counterpart station (6);
- determining a signal run time from the length of the direction vector (8);
- adaptive adjustment of the transmission pause (13) to the determined signal run time by a timer of the communication control module.

2. Communication method according to claim 1, **characterised in that** with a transmission pause (13) provided by the communications protocol, which is shorter than the determined signal run time, the transmission pause is at least equivalent to the determined signal run time.

3. Communication method according to claim 1 or 2, **characterised in that** with a transmission pause (13) provided by the communications protocol, which is longer than the determined signal run time, the transmission pause is at least equivalent to the determined signal run time.

4. Communication method according to any of claims 1 to 3, **characterised in that** the position data of the vehicle (1) is extracted from data packages, which have been received by means of a receiver provided on the vehicle by a global satellite navigation system (7).

5. Communication method according to any of claims 1 to 3, **characterised in that** by an automated identification system (6) of the vehicle (1) and/or the counterpart station (3), movement data are output cyclically and received by a receiving device of the vehicle (1).

6. Communication method according to any of claims 1 to 5, **characterised in that** from the received movement data an identifier is extracted, and is saved as a counterpart station identifier in a database of the communication control module.

7. Communication method according to claim 6, **characterised in that** a group identifier is allocated to a selection of saved counterpart station identifiers and saved.

8. Communication method according to claim 6 or 7, **characterised in that** the adaptation of the transmission pause (13) is only performed for counterpart stations for which a group identifier is saved in the database.

9. Communication method according to any of claims 1 to 8, **characterised in that** position data of at least one stationary counterpart station are saved in the database.

10. Communication method according to any of claims 1 to 9, **characterised in that** movement data are received from a plurality of counterpart stations (3), and **in that** for each of said counterpart stations (3) a direction vector (8) is determined.

11. Communication method according to claim 10, **characterised in that** the signal run time is determined as a maximum of the lengths of the direction vectors (8).

12. Communication method according to any of claims 1 to 11, **characterised in that** the timer cyclically performs the adaptation of the transmission pause (13).

13. Communication method according to any of claims 1 to 11, **characterised in that** the timer forms the transmission pause (13) from the signal run time and a safety time span.

14. Communication method according to any of claims 1 to 13, **characterised in that** in the communication control module a cell plan is saved, which comprises the coordinates of the supply area, and **in that** by the communication control module the determined position data of the vehicle (1) is compared with the saved coordinates of the supply area, and in a vehicle position outside the supply area, the communications interface of the vehicle is deactivated.

15. Communication method according to claim 14, **characterised in that** from the counterpart station via the communication connection a cell plan is transmitted to the vehicle, and is saved by the communication control module.

16. Communication method according to any of claims 1 to 15, **characterised in that** the communication control module establishes via the communication connection a data connection to a processing service and transmits the position data of the vehicle and the counterpart station to the processing service and receives the signal run time and/or an updated communications protocol.

17. Communication method according to any of claims 1 to 16, wherein the communications protocol is processed by the communication control module, **characterised in that** the timer of the communication control module is designed to influence the transmission pause (13), which timer has an signal input at which a run time signal is present, which run time signal is used as a basis for influencing.

18. Communication method according to claim 17, **characterised in that** the communications protocol is formed as a one of the protocols of the group CSMA/CA, WiMAX and LTE.

## Revendications

1. Procédé de communication adaptant la position, réalisé par un module de commande de communication d'un véhicule (1) mobile, pour l'établissement et le maintien d'une liaison de communication (4) entre une interface de communication d'un véhicule (1) mobile, en particulier un bateau et/ou un aéronef, et une interface de communication d'une station correspondante (3),
dans lequel le procédé de communication est un procédé de communication à base de paquet, avec un protocole de communication qui transmet dans un cadre de communication, dans un ordre des données utiles, des données de sauvegarde et éventuellement des données de signalisation, comme paquet de données, et dans lequel entre des paquets de données et/ou dans les paquets de données une pause de transmission (13) est prévue, dans lequel la pause de transmission (13) résulte de la somme d'une durée de fonctionnement (9) d'un paquet de données du véhicule (1) à la station correspondante (3), d'un temps de traitement (10) pour la réception et la préparation du paquet de données et pour la génération d'un message de confirmation à la station correspondante (3) et d'une durée de fonctionnement (11) du message de confirmation de la station correspondante (3) au véhicule (1),
comprenant les étapes
- de détermination de données de position du véhicule (1) par rapport à un système de coordonnées ;
- de réception d'un jeu de données de déplacement d'au moins une station correspondante au moyen d'un dispositif de réception ;
- d'extraction de données de position hors des données de déplacement reçues et de définition de la position de la station correspondante dans le système de coordonnées global ;
- de détermination d'un vecteur de direction (8) du véhicule (1) à la station correspondante (6) ;
- de détermination d'une durée de fonctionnement de signal à partir de la longueur du vecteur de direction (8) ;
- d'adaptation adaptive de la pause de transmission (13) à la durée de fonctionnement de signal déterminée par une minuterie du module de commande de communication.

2. Procédé de communication selon la revendication 1, **caractérisé en ce que** pour une pause de transmission (13) prévue par le protocole de communication qui est plus courte que la durée de fonctionnement de signal déterminée, la pause de transmission est assimilée au moins à la durée de fonctionnement de signal déterminée.

3. Procédé de communication selon la revendication 1 ou 2, **caractérisé en ce que** pour une pause de transmission (13) prévue par le protocole de communication qui est plus longue que la durée de fonctionnement de signal déterminée, la pause de transmission est mise au même niveau au moins que la durée de fonctionnement de signal déterminée.

4. Procédé de communication selon l'une des revendications 1 à 3, **caractérisé en ce que** les données de position du véhicule (1) sont extraites de paquets de données qui ont été reçus au moyen d'un récepteur prévu au niveau du véhicule par un système de navigation satellite global (7).

5. Procédé de communication selon l'une des revendications 1 à 3, **caractérisé en ce que** des données de déplacement sont émises de manière cyclique par un système d'identification automatisé (6) du véhicule (1) et/ou de la station correspondante (3) et sont reçues par un dispositif de réception du véhicule (1).

6. Procédé de communication selon l'une des revendications 1 à 5, **caractérisé en ce qu'**une caractéristique d'identification est extraite des données de déplacement reçues, et est déposée comme caractéristique de station correspondante dans une base de données du module de commande de communication.

7. Procédé de communication selon la revendication 6, **caractérisé en ce qu'**une identification de groupe est attribuée à une sélection de caractéristiques de station correspondante enregistrées et enregistrée.

8. Procédé de communication selon la revendication 6 ou 7, **caractérisé en ce que** l'adaptation de la pause de transmission (13) est réalisée seulement pour des stations correspondantes pour lesquelles une identification de groupe est enregistrée dans la base de données.

9. Procédé de communication selon l'une des revendications 1 à 8, **caractérisé en ce que** des données de position d'au moins une station correspondante fixe sont enregistrées dans la base de données.

10. Procédé de communication selon l'une des revendications 1 à 9, **caractérisé en ce que** des données de déplacement de plusieurs stations correspondantes (3) sont reçues, et que pour chacune de ces stations correspondantes (3) un vecteur de direction (8) est déterminé.

11. Procédé de communication selon la revendication 10, **caractérisé en ce que** la durée de fonctionnement de signal est déterminée comme maximum des longueurs des vecteurs de direction (8).

12. Procédé de communication selon l'une des revendications 1 à 11, **caractérisé en ce que** la minuterie réalise de manière cyclique l'adaptation de la pause de transmission (13).

13. Procédé de communication selon l'une des revendications 1 à 11, **caractérisé en ce que** la minuterie forme la pause de transmission (13) à partir de la durée de fonctionnement de signal et d'un intervalle de sécurité.

14. Procédé de communication selon l'une des revendications 1 à 13, **caractérisé en ce que** dans le module de commande de communication un plan cellulaire est enregistré, lequel comporte des coordonnées de la zone de desserte, et que
les données de position déterminées du véhicule (1) sont comparées par le module de commande de communication avec les coordonnées enregistrées de la zone de desserte, et pour une position de véhicule en dehors de la zone de desserte l'interface de communication du véhicule est désactivée.

15. Procédé de communication selon la revendication 14, **caractérisé en ce qu'**un plan cellulaire est transmis au véhicule par la station correspondante par le biais de la liaison de communication, et est enregistré par le module de commande de communication.

16. Procédé de communication selon l'une des revendications 1 à 15, **caractérisé en ce que** le module de commande de communication établit par le biais de la liaison de communication une liaison de données avec un service de traitement et transmet les données de position du véhicule et de la station correspondante au service de traitement et reçoit la durée de fonctionnement de signal et/ou un protocole de communication actualisé.

17. Procédé de communication selon l'une des revendications 1 à 16, dans lequel le protocole de communication est exécuté par le module de commande de communication, **caractérisé en ce que** la minuterie du module de commande de communication est réalisée pour l'influence de la pause de transmission (13), laquelle minuterie présente une entrée de signal, au niveau de laquelle un signal de durée de fonctionnement est appliqué, lequel signal de durée de fonctionnement sert de base pour l'influence.

18. Procédé de communication selon la revendication 17, **caractérisé en ce que** le protocole de communication est formé comme un des protocoles du groupe CSMA/CA, WiMAX et LTE.
